# EUROPÄISCHE PATENTSCHRIFT

(11) **EP 3 938 136 B1**
(45) Veröffentlichungstag und Bekanntmachung des Hinweises auf die Patenterteilung: **27.12.2023**
(21) Anmeldenummer: 20709121.6
(22) Anmeldetag: 04.03.2020
(51) Int. Cl.: B23K 26/03, B23K 26/06, B23K 26/22, B23K 26/244, B23K 26/32, B23K 101/38, B23K 103/12

(54) **HAIRPIN-SCHWEISSVERFAHREN**
HAIRPIN WELDING METHOD
PROCÉDÉ DE SOUDAGE D'ÉPINGLES

(30) Priorität: 12.03.2019 DE 102019203350
(43) Veröffentlichungstag der Anmeldung: 19.01.2022
(73) Patentinhaber: Trumpf Laser- und Systemtechnik GmbH, 71254 Ditzingen (DE)
(72) Erfinder: BOCKSROCKER, Oliver, 74343 Sachsenheim (DE); SPEKER, Nicolai, 74385 Pleidelsheim (DE); BRUEGGEBORS, Jens, 71701 Schwieberdingen (DE)
(74) Vertreter: Trumpf Patentabteilung
(86) Internationale Anmeldenummer: PCT/EP2020/055730
(87) Internationale Veröffentlichungsnummer: WO 2020/182578

(56) Entgegenhaltungen:
- EP-A1- 3 292 940
- US-A1- 2014 097 161
- US-A1- 2016 016 263
- US-A1- 2016 361 782

## Beschreibung

Die Erfindung betrifft ein Hairpin-Schweißverfahren, bei dem die bündig nebeneinander angeordneten Drahtenden mindestens zweier Kupferdrähte miteinander mittels eines Laserstrahls verschweißt werden.

Ein derartiges Hairpinschweißverfahren ist beispielsweise durch die EP 3 292 940 A1 bekannt geworden.

Bekannt sind ferner Techniken zur Strahlformung, bei der ein Laserstrahl einen Kernbereich und einen den Kernbereich umgebenden Randbereich aufweist, wobei die Intensität des Laserstrahls im Kernbereich größer ist als die Intensität des Laserstrahls im Randbereich. Derartige Techniken sind beispielweise in der US 2016/361782 A1 oder in der US 2016/016263 A1 beschrieben.

Zur Ausbildung von Statoren in Elektromotoren ist es bekannt, einen aus einem isolierenden Material ausgebildeten Statorkäfig bereitzustellen, in welchen sogenannte Hairpins aus einem elektrisch leitenden Material, bevorzugt Kupfer, eingebracht werden. Die Hairpins können beispielsweise klammerförmig oder linear ausgebildet sein und liegen nach ihrem Einbringen in den Statorkäfig parallel zueinander und im Wesentlichen in Axialrichtung des Stators bzw. des Elektromotors in dem Statorkäfig vor. Um den Umfang des Statorkäfigs herum wird eine Vielzahl solcher Hairpins in den Statorkäfig eingebracht, die während der Montage beziehungsweise Fertigung zunächst keine mechanische und elektrische Verbindung zueinander aufweisen. Die jeweiligen freien Enden der Hairpins werden nach dem Einbringen in den Statorkäfig und nach einer eventuellen Umformung und/oder Kürzung und einer eventuellen Vorbehandlung, beispielsweise einer Entlackung, dann zur Ausbildung einer vollständigen Statorwicklung bevorzugt paarweise miteinander gefügt, beispielsweise durch Verschweißen. Durch das Fügen werden sowohl eine mechanische Verbindung als auch eine elektrisch leitende Verbindung zwischen den freien Enden der jeweiligen Hairpins-Paare hergestellt, so dass die nach dem Einbringen zunächst einzeln vorliegenden Hairpins nun verbunden sind. Durch das Fügen der Hairpins kann eine mechanisch und elektrisch miteinander verbundene, durchgehende Statorwicklung ausgebildet werden.

Die Hairpins weisen meist einen quadratischen oder rechteckigen Querschnitt auf, dessen Querschnittsfläche wesentlich größer ist als die eines zum Wickeln ausgebildeten Drahts. Dadurch wird ein gegenüber einem Draht erhöhter Stromfluss ermöglicht. Die damit erreichbare Steigerung der Leistungsfähigkeit von Elektromotoren ist insbesondere bei Elektromotoren für Kraftfahrzeuge vorteilhaft, da diese sehr hohen Leistungsanforderungen gerecht werden müssen.

Das Schweißen von Hairpins für die Elektromotorenfertigung im Bereich eMobility ist ein meist laserbasiertes Verfahren, bei dem die Enden zweier Kupferdrähte rechteckigen Querschnitts stirnseitig miteinander verschweißt werden. Üblicherweise kommt hierbei ein NIR-Laser mit einem Top-Hat-Strahlprofil in Kombination mit einer Strahloszillationstechnik, wie sie in der EP 3 292 940 A1 beschrieben ist, zum Einsatz. Dabei entstehen während des Schweißprozesses sowohl Spritzer, die zu Verunreinigungen auf umliegenden Bauteilen führen und deren Kurzschlussrisiko erhöhen, als auch Poren in der Schweißnaht (Schweißperle), die die elektrische Leitfähigkeit und die mechanische Festigkeit vermindern. Diese Spritzer und Poren führen in der Elektromotorenfertigung zu hohen Ausschussraten.

Demgegenüber liegt der vorliegenden Erfindung die Aufgabe zugrunde, beim Hairpinschweißen das Auftreten von Spritzern und Poren zu reduzieren, sowie eine zugehörige Hairpin-Schweißvorrichtung anzugeben.

Ein Hairpin-Schweißverfahren entsprechend der Erfindung ist im Anspruch 1 definiert.

Weitere Ausführungsbeispiele der Erfindung sind in den abhängigen Ansprüche definiert.

Erfindungsgemäß weist der Strahlquerschnitt einen inneren Kernbereich und einen äußeren Ringbereich auf, die in einem bestimmten Größen- und Intensitätsverhältnis zueinander stehen und die den Prozess derart beeinflussen, dass deutlich weniger Poren und Spritzer entstehen. Instabilitäten eines langgezogenen Keyholes führen zu Spritzern, wenn das Keyhole eine Auswölbung bildet, ein Überdruck entsteht und die Schmelze dann explosionsartig durch das sich öffnende Keyhole ausgeworfen wird. Wenn Instabilitäten im langgezogenen Keyhole Auswölbungen am unteren Ende erzeugen, die sich ablösen, entstehen Poren, wobei Implosionen am Prozessende vermehrt zu Poren führen. Die Laserleistung im Ringbereich führt zur Stabilisierung des Keyholes und damit zur Beruhigung der Schmelzbaddynamik, wodurch die Entstehung von Spritzern reduziert wird. Die Laserleistung im Ringbereich führt zu einem kegelförmig geöffneten bzw. oben aufgeweiteten Keyhole, das im unteren Bereich weniger abgeschnürt werden kann und so die Entgasung verbessert und der Entstehung von Poren entgegenwirkt. Versuche haben gezeigt, dass zur Reduktion von Spritzern ein Leistungsanteil im Kernbereich von 10-50 % und zur Reduktion von Poren ein Leistungsanteil im Kern von 10-30 % erforderlich besonders vorteilhaft ist. Als optimal wurde ein Leistungsanteil im Kernbereich von ca. 30% gefunden.

Vorzugsweise beträgt die Laserleistung im Kernbereich mindestens 0,9 kW, um prozesssicher ein Keyhole zu erzeugen. Die Wellenlänge beträgt beispielsweise 1030 nm, aber auch andere Wellenlängen sind möglich, wie z.B. 515 nm oder 450 nm.

Wie Versuche weiter gezeigt haben, muss auch der Spotdurchmesser auf den Drahtenden optimal für das Hairpinschweißen eingestellt werden. Der Spotdurchmesser des Kernbereichs beträgt daher erfindungsgemäß zwischen 50 µm und 200 µm, bevorzugt ca. 85 µm, ca. 136 µm oder 170 µm, und der Spotaußendurchmesser des Ringbereichs zwischen 250 µm und 700 µm, bevorzugt ca. 340 µm, ca. 408 µm, ca. 442 µm oder ca. 680 µm. Als optimal wurden ein Spotdurchmesser des Kernbereichs von 85 µm und ein Spotaußendurchmesser des Ringbereichs von 340 µm gefunden.

Vorzugsweise wird der Laserstrahl auf den beiden Stirnflächen der Drahtenden, insbesondere in immer der gleichen Linearbewegung oder in immer der gleichen Kreisbahn ("Strahloszillation"), bewegt, um auf den beiden Stirnflächen eine geschmolzene Schweißperle zu erzeugen. Die Geschwindigkeit ("Oszillationsvorschub"), mit der sich der Laserstrahl auf den beiden Stirnflächen der Drahtenden bewegt, beträgt vorteilhaft zwischen 200 mm/s und 1600 mm/s, wobei die besten Ergebnisse bei 800 mm/s erzielt wurden.

In einer besonders bevorzugten Verfahrensvariante wird der auf die Drahtenden auftreffende Strahlquerschnitt mittels einer Doppelfaser erzeugt, die eine Kernfaser und eine die Kernfaser umgebende Ringfaser aufweist. Dabei wird der Laserstrahl sowohl in die Kern- als auch in die Ringfaser eingekoppelt, wobei die in die Doppelfaser eingekoppelte Laserleistung auf die Kernfaser und die Ringfaser im Verhältnis zwischen 10:90 und 50:50, bevorzugt zwischen 20:80 und 40:60, besonders bevorzugt im Verhältnis von ca. 30:70, aufgeteilt wird.

Bevorzugt beträgt das Verhältnis des Außendurchmessers der Ringfaser zum Durchmesser der Kernfaser zwischen 5:1 und 3:1, bevorzugt ca. 4:1. Vorzugsweise beträgt der Durchmesser der Kernfaser zwischen 50 µm und 250 µm, bevorzugt zwischen 50 µm und 200 µm, besonders bevorzugt ca. 50 µm, ca. 80 µm, ca. 100 µm oder ca. 200 µm, und der Außendurchmesser der Ringfaser zwischen 150 µm und 800 µm, bevorzugt zwischen 200 µm und 700 µm, besonders bevorzugt ca. 200 µm, ca. 240 µm, ca. 260 µm, ca. 400 µm oder ca. 700 µm. Dies kann beispielsweise mit einer Doppelfaser mit Durchmessern von 100 µm/400 µm oder mit Durchmessern von 50 µm/200 µm umgesetzt werden. Weitere Durchmesserverhältnisse können zum Einsatz kommen, so z.B. 100 µm/260 µm oder 80 µm/240 µm oder ähnliche. In Versuchen hat sich gezeigt, dass die Prozesseffizienz durch den Einsatz einer 50 µm/200 µm-Faser im Vergleich zu einer 100 µm/400 µm -Faser bei gleicher Abbildung gesteigert werden kann, was wiederum zu kürzeren Prozesszeiten bei gleicher Laserleistung führt.

Die Positionierung des Laserstrahls auf den Drahtenden kann mittels eines kamerabasierten Sensorsystems erfolgen, um insbesondere die Oszillationsposition und -geometrie entsprechend der Fügesituation anpassen zu können.

Weitere Vorteile und vorteilhafte Ausgestaltungen des Gegenstands der Erfindung ergeben sich aus der Beschreibung, den Ansprüchen und den Zeichnungen. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: schematisch eine Hairpin-Schweißvorrichtung zum Verschweißen von Hairpins;
- Fign. 2a, 2b: zwei Intensitätsprofile des auf die Hairpins auftreffenden Laserstrahls; und
- Fig. 3: Oszillationen des Laserstrahls auf der Stirnflächen der Hairpins.

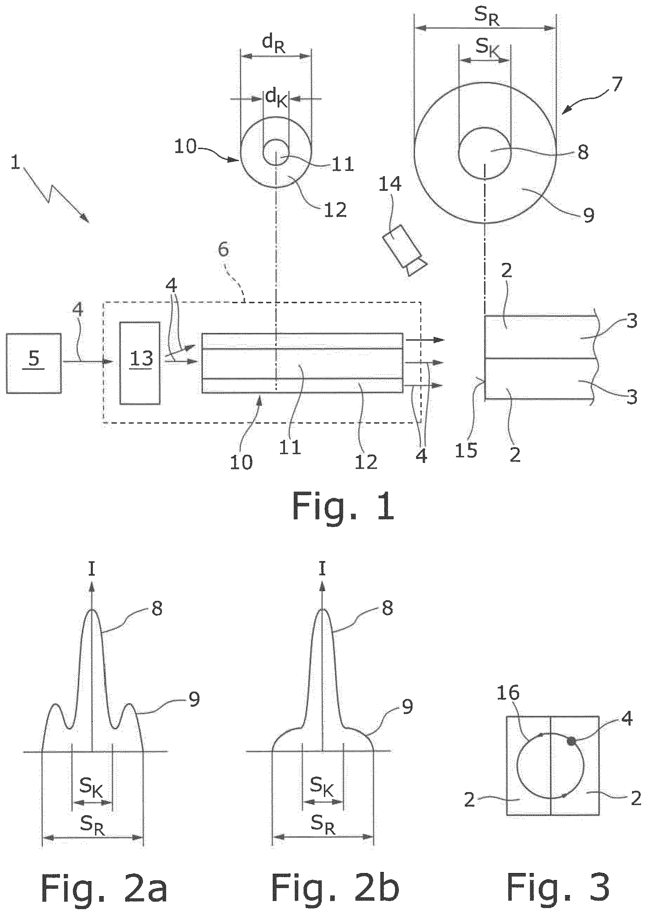

Die in **Fig. 1** gezeigte Hairpin-Schweißvorrichtung **1** dient zum Verschweißen von bündig nebeneinander angeordneten Drahtenden **2** zweier Kupferdrähte **3** mittels eines Laserstrahls **4**. Die Hairpin-Schweißvorrichtung 1 umfasst einen Laserstrahlerzeuger **5** zum Erzeugen des Laserstrahls 4 (Wellenlänge 1030 nm, Leistung 5 kW) und eine im Strahlengang des Laserstrahls 4 angeordneten Strahlformungsoptik **6** zum Erzeugen eines Strahlquerschnitts **7** auf den Drahtenden 2, der einen kreisrunden Kernbereich **8** und einen den Kernbereich 8 unmittelbar umgebenden, kreisrunden Ringbereich **9** aufweist.

Die Strahlformungsoptik 6 ist durch eine Doppelfaser **10** mit einer Kernfaser **11** und mit einer die Kernfaser 10 umgebenden Ringfaser **12** sowie durch eine Einkoppeloptik **13**, z.B. in Form einer im Strahlengang angeordneten Keilplatte, gebildet, die den Laserstrahl 4 zeitgleich in die Kernfaser 8 und in die Ringfaser 9 einkoppelt. Das Durchmesserverhältnis **d_{R}/d_{K}** der Ringfaser 12 zur Kernfaser 11 beträgt bevorzugt 4:1, was beispielsweise mit einer Doppelfaser 10 mit Durchmessern von 200 µm/50 µm oder mit Durchmessern von 400 µm/100 µm umgesetzt werden kann. Die Einkoppeloptik 13 koppelt den Laserstrahl 4 zeitgleich sowohl in die Kern- als auch in die Ringfaser 11, 12 ein, und zwar im Verhältnis von ca. 30:70 auf die Kernfaser 8 und die Ringfaser 9. Bei einer Vergrößerung von 1,7:1 beträgt bei einer Doppelfaser 10 mit Durchmessern von 50µm/200µm der Spotdurchmesser **s_{K}** des Kernbereichs 8 auf den Drahtenden 2 ca. 85 µm und der Spotaußendurchmesser **s_{R}** des Ringbereichs 9 auf den Drahtenden 2 ca. 340 µm.

Die Positionierung des Laserstrahls 4 auf den Drahtenden 2 erfolgt mittels eines kamerabasierten Sensorsystems **14**.

**Fign. 2a, 2b** zeigen zwei mögliche Intensitätsprofile des auf die beiden Stirnflächen **15** der Drahtenden 2 auftreffenden Laserstrahls 4. In Fig. 2a weist der Ringbereich 9 sein eigenes Intensitätsmaximum auf, wohingegen in Fig. 2b die Intensität im Ringbereich 9 radial nach außen kontinuierlich abnimmt. Wie Röntgenmessungen zeigen, führt die Laserleistung im Ringbereich 9 zu einem kegelförmig geöffneten Keyhole, das im unteren Bereich nicht abgeschnürt werden kann und somit die Entgasung verbessert und der Entstehung von Poren entgegenwirkt. Die Laserleistung im Ringbereich 9 führt zur Stabilisierung des Keyholes und damit zur Beruhigung der Schmelzbaddynamik, wodurch die Entstehung von Spritzern und Poren reduziert wird.

Der Laserstrahl 4 fährt die beiden Stirnflächen 15 der Drahtenden 2 in immer der gleichen Linearbewegung oder, wie in **Fig. 3** gezeigt ist, in immer der gleichen Kreisbahn ("Strahloszillation") **16**, ab, um auf den beiden Stirnflächen 15 eine geschmolzene Schweißperle zu erzeugen. Der Laserstrahl 4 bewegt sich also im Kreis auf derselben Stelle, wobei der Kreisdurchmesser nahezu der Breite der beiden Stirnflächen 15 entspricht. Die Geschwindigkeit ("Oszillationsvorschub"), mit der sich der Laserstrahl 4 auf den beiden Stirnflächen 15 bewegt, beträgt optimalerweise 800 mm/s.

## Patentansprüche

1. Hairpin-Schweißverfahren, bei dem die bündig nebeneinander angeordneten Drahtenden (2) mindestens zweier Kupferdrähte (3) miteinander mittels eines Laserstrahls (4) verschweißt werden, **gekennzeichnet durch**: Erzeugen eines Laserstrahls (4) mit einem stirnseitig auf die Drahtenden (2) auftreffenden Strahlquerschnitt (7), der einen runden Kernbereich (8) und einen den Kernbereich (8), insbesondere unmittelbar, umgebenden Ringbereich (9) aufweist, wobei
- das Verhältnis des Außendurchmessers (d_{R}) des Ringbereichs (9) zum Durchmesser (d_{K}) des Kernbereichs (8) zwischen 5:1 und 2:1, bevorzugt ca. 4:1, beträgt,
- der Spotdurchmesser (s_{K}) des Kernbereichs (8) auf den Drahtenden (2) zwischen 50 µm und 200 µm, insbesondere ca. 85 µm, beträgt,
- der Spotaußendurchmesser (s_{R}) des Ringbereichs (9) auf den Drahtenden (2) zwischen 250 µm 700 µm, bevorzugt ca. 340 µm, beträgt, und
- das Verhältnis der Laserleistung im Kernbereich (8) zu der Laserleistung im Ringbereich (9) zwischen 25:75 und 70:30, besonders bevorzugt ca. 30:70, beträgt.

2. Hairpin-Schweißverfahren nach Anspruch 1, **dadurch gekennzeichnet, dass** die Laserleistung im Kernbereich (8) mindestens 0,9 kW beträgt.

3. Hairpin-Schweißverfahren nach einem der vorhergehenden Ansprüche, **dadurch gekennzeichnet, dass** der Laserstrahl (4) auf den beiden Stirnflächen (15) der Drahtenden (2), insbesondere in immer der gleichen Kreisbahn, bewegt wird, um auf den beiden Stirnflächen (15) eine geschmolzene Schweißperle zu erzeugen.

4. Hairpin-Schweißverfahren nach Anspruch 3, **dadurch gekennzeichnet, dass** die Geschwindigkeit, mit der sich der Laserstrahl (4) auf den beiden Stirnflächen (15) der Drahtenden (2) bewegt, zwischen 200 mm/s und 1600 mm/s, bevorzugt ca. 800 mm/s, beträgt.

5. Hairpin-Schweißverfahren nach einem der vorhergehenden Ansprüche, **dadurch gekennzeichnet, dass** der auf die Drahtenden (2) auftreffende Strahlquerschnitt (7) mittels einer Doppelfaser (10) erzeugt wird, die eine Kernfaser (11) und eine die Kernfaser (11) umgebende Ringfaser (12) aufweist, wobei der Laserstrahl (4) sowohl in die Kern- als auch in die Ringfaser (11, 12) eingekoppelt wird und wobei eine in die Doppelfaser (10) eingekoppelte Laserleistung auf die Kernfaser (8) und die Ringfaser (9) im Verhältnis zwischen 25:75 und 70:30 besonders bevorzugt im Verhältnis von ca. 30:70, aufgeteilt wird.

6. Hairpin-Schweißverfahren nach Anspruch 5, **dadurch gekennzeichnet, dass** das Verhältnis des Außendurchmessers (d_{R}) der Ringfaser (9) zum Durchmesser (d_{K}) der Kernfaser (8) zwischen 5:1 und 3:1, bevorzugt ca. 4:1, beträgt.

7. Hairpin-Schweißverfahren nach Anspruch 5 oder 6, **dadurch gekennzeichnet, dass** der Durchmesser (d_{K}) der Kernfaser (8) zwischen 25 µm und 250 µm, bevorzugt zwischen 50µm und 200 µm, besonders bevorzugt ca. 50µm, ca. 80µm, ca. 100 µm oder ca. 200 µm, beträgt.

8. Hairpin-Schweißverfahren nach einem der Ansprüche 5 bis 7, **dadurch gekennzeichnet, dass** der Außendurchmesser (d_{R}) der Ringfaser (9) zwischen 150 µm und 800 µm, bevorzugt zwischen 200 µm und 700 µm, besonders bevorzugt ca. 200 µm, ca. 240 µm, ca. 260 µm, ca. 400 µm oder ca. 700 µm, beträgt.

9. Hairpin-Schweißverfahren nach einem der vorhergehenden Ansprüche, **dadurch gekennzeichnet, dass** die Positionierung des Laserstrahls (4) auf den Drahtenden (2) mittels eines kamerabasierten Sensorsystems (14) erfolgt.

## Claims

1. A hairpin welding method in which the wire ends (2) of at least two copper wires (3), the wire ends being arranged flush next to one another, are welded to one another by a laser beam (4), the method being **characterized by**:
generating a laser beam (4) with a beam cross section (7) which impinges the wire ends (2) at an end side and which has a round core region (8) and a ring region (9) surrounding, in particular directly surrounding, the core region (8), wherein
- the ratio of the outer diameter (d_{R}) of the ring region (9) to the diameter (d_{K}) of the core region (8) is between 5:1 and 2:1, preferably approximately 4:1,
- the spot diameter (s_{K}) of the core region (8) at the wire ends (2) is between 50 µm and 200 µm, in particular approximately 85 µm,
- the spot diameter (s_{R}) of the ring region (9) at the wire ends (2) is between 250 µm and 700 µm, in particular approximately 340 µm, and
- the ratio of the laser power in the core region (8) to the laser power in the ring region (9) is between 25:75 and 70:30, particularly preferably approximately 30:70.

2. The hairpin welding method according to claim 1, **characterized in that** the laser power in the core region (8) is at least 0.9 kW.

3. The hairpin welding method according to one of the preceding claims, **characterized in that** the laser beam (4) is moved on both end faces (15) of the wire ends (2), in particular always in the same circular path, in order to produce a molten weld bead on both end faces (15).

4. The hairpin welding method according to claim 3, **characterized in that** the speed at which the laser beam (4) moves on both end faces (15) of the wire ends (2) is between 200 mm/s and 1600 mm/s, preferably approximately 800 mm/s.

5. The hairpin welding method according to one of the preceding claims, **characterized in that** the beam cross section (7) which impinges on the wire ends (2) is generated by a double fiber (10) having a core fiber (11) and a ring fiber (12) surrounding the core fiber (11), wherein the laser beam (4) is coupled into both the core fiber and the ring fiber (11, 12) and wherein a laser power coupled into the double fiber (10) is divided between the core fiber (8) and the ring fiber (9) at a ratio of between 25:75 and 70:30, particularly preferably in a ratio of approximately 30:70.

6. The hairpin welding method according to claim 5, **characterized in that** the ratio of the outer diameter (d_{R}) of the ring fiber (9) to the diameter (d_{K}) of the core fiber (8) is between 5:1 and 3:1, preferably approximately 4:1.

7. The hairpin welding method according to claim 5 or 6, **characterized in that** the diameter (d_{K}) of the core fiber (8) is between 25 µm and 250 µm, preferably between 50 µm and 200 µm, particularly preferably approximately 50 µm, approximately 80 µm, approximately 100 µm or approximately 200 µm.

8. The hairpin welding method according to one of claims 5 to 7, **characterized in that** the diameter (d_{R}) of the ring fiber (9) is between 150 µm and 800 µm, preferably between 200 µm and 700 µm, particularly preferably approximately 200 µm, approximately 240 µm, approximately 260 µm, approximately 400 µm or approximately 700 µm.

9. The hairpin welding method according to one of the preceding claims, **characterized in that** the positioning of the laser beam (4) takes place at the wire ends (2) using a camera-based sensor system (14).

## Revendications

1. Procédé de soudage Hairpin, dans lequel les extrémités de fil (2) d'au moins deux fils de cuivre (3), disposées à fleur l'une à côté de l'autre, sont soudées entre elles au moyen d'un faisceau laser (4), **caractérisé par** :
la génération d'un faisceau laser (4) avec une section transversale de faisceau (7) arrivant sur les extrémités de fil (2) du côté frontal, présentant une zone centrale (8) ronde et une zone annulaire (9) entourant, en particulier directement, la zone centrale (8), où
- le rapport entre le diamètre extérieur (d_{R}) de la zone annulaire (9) et le diamètre (d_{K}) de la zone centrale (8) est compris entre 5:1 et 2:1, de préférence environ 4:1,
- le diamètre de point (s_{K}) de la zone centrale (8) sur les extrémités du fil (2) est compris entre 50 µm et 200 µm, en particulier d'environ 85 µm,
- le diamètre de point extérieur (s_{R}) de la zone annulaire (9) sur les extrémités du fil (2) est compris entre 250 µm 700 µm, de préférence environ 340 µm, et
- le rapport entre la puissance du laser dans la zone centrale (8) et la puissance du laser dans la zone annulaire (9) est compris entre 25:75 et 70:30, de préférence environ 30:70.

2. Procédé de soudage Hairpin selon la revendication 1, **caractérisé en ce que** la puissance du laser dans la zone centrale (8) est d'au moins 0,9 kW.

3. Procédé de soudage Hairpin selon l'une des revendications précédentes, **caractérisé en ce que** le faisceau laser (4) est déplacé sur les deux faces frontales (15) des extrémités de fil (2), en particulier toujours selon la même trajectoire circulaire, afin de générer une perle de soudure en fusion sur les deux faces frontales (15).

4. Procédé de soudage Hairpin selon la revendication 3, **caractérisé en ce que** la vitesse à laquelle le faisceau laser (4) se déplace sur les deux faces frontales (15) des extrémités de fil (2) est comprise entre 200 mm/s et 1600 mm/s, de préférence environ 800 mm/s.

5. Procédé de soudage Hairpin selon l'une des revendications précédentes, **caractérisé en ce que** la section transversale du faisceau (7) arrivant sur les extrémités de fil (2) est générée au moyen d'une fibre double (10) présentant une fibre de coeur (11) et une fibre annulaire (12) entourant la fibre de coeur (11), le faisceau laser (4) étant couplé aussi bien dans la fibre de coeur que dans la fibre annulaire (11, 12) et une puissance du laser couplée dans la fibre double (10) étant répartie sur la fibre de coeur (8) et la fibre annulaire (9) dans un rapport compris entre 25:75 et 70:30, de préférence dans un rapport d'environ 30:70.

6. Procédé de soudage Hairpin selon la revendication 5, **caractérisé en ce que** le rapport du diamètre extérieur (d_{R}) de la fibre annulaire (9) au diamètre (d_{K}) de la fibre de coeur (8) est compris entre 5:1 et 3:1, de préférence environ 4:1.

7. Procédé de soudage Hairpin selon la revendication 5 ou 6, **caractérisé en ce que** le diamètre (d_{K}) de la fibre de coeur (8) est compris entre 25 µm et 250 µm, de préférence entre 50 µm et 200 µm, est idéalement d'environ 50 µm, d'environ 80 µm, d'environ 100 µm ou d'environ 200 µm.

8. Procédé de soudage Hairpin selon l'une des revendications 5 à 7, **caractérisé en ce que** le diamètre extérieur (d_{R}) de la fibre annulaire (9) est compris entre 150 µm et 800 µm, de préférence entre 200 µm et 700 µm, est idéalement d'environ 200 µm, d'environ 240 µm, d'environ 260 µm, d'environ 400 µm ou d'environ 700 µm.

9. Procédé de soudage Hairpin selon l'une des revendications précédentes, **caractérisé en ce que** le positionnement du faisceau laser (4) sur les extrémités de fil (2) est effectué au moyen d'un système de capteurs (14) basé sur une caméra.
